# EUROPÄISCHE PATENTANMELDUNG

(11) **EP 3 599 706 A1**
(43) Veröffentlichungstag der Anmeldung: **29.01.2020**
(21) Anmeldenummer: 18184978.7
(22) Anmeldetag: 23.07.2018
(51) Int. Cl.: H02K 5/22

(54) **KLEMMENKASTEN EINER DYNAMOELEKTRISCHEN ELEKTRISCHEN MASCHINE**

(71) Anmelder: Siemens Aktiengesellschaft, 80333 München (DE)
(72) Erfinder: CHRISTOF, Jan, 15500 Prag 5 (CZ); LANGE, Thomas, 90766 Fürth (DE); MALIK, Jiri, 14800 Prag 4 (CZ)

(57) **Zusammenfassung**

Die Erfindung betrifft einen Klemmenkasten (2) einer dynamoelektrischen Maschine (1) mit einem Anschlusselement, das einen Isolator (5) aufweist, dessen Fußbereich (6) auf einer Basisplatte (3) angeordnet ist, dessen Kopfbereich (9) dazu ausgebildet ist, zumindest eine erste zugehende elektrische Leitung und eine zweite abgehende elektrische Leitung zu kontaktieren, die über eine vorgegebene Öffnungen des Klemmenkastens (2) in den Klemmenkasten (2) führbar sind, wobei der Kopfbereich (9) des Anschlusselements mit zumindest einer Verstärkungsplatte (7) versehen ist, die sich an dem Gehäuse des Klemmenkastens (3) abstützt.

## Beschreibung

Die Erfindung betrifft einen Klemmenkasten einer dynamoelektrischen Maschine und eine dynamoelektrische Maschine mit einem derartigen Klemmenkasten.

Klemmenkasten dynamoelektrischer Maschinen enthalten Anschlusselemente und Öffnungen zur Kabel- oder Leitungsführung. Die Anschlusselemente sind dazu geeignet, die Leitungen oder Kabel auf Anschlussbolzen zu kontaktieren und elektrische Energie von oder zur dynamoelektrischen Maschine zu leiten.

Die Anschlusselemente sind dabei derart ausgeführt, dass ein Anschlussbolzen innerhalb eines Isolators angeordnet ist, der mittels eines Fußbereichs auf einer Basisplatte fixiert ist.

Im Einsatzbereich der dynamoelektrischen Maschine ist vor allem der Fußbereich der Isolatoren im Klemmenkasten u.a. bei Kurzschlüssen starken Kräften ausgesetzt, die zu mechanischen Belastungen, insbesondere im Fußbereich der Isolatoren führen.

Ausgehend davon liegt der Erfindung die Aufgabe zugrunde, einen Klemmenkasten einer dynamoelektrischen Maschine zu schaffen, der insbesondere diesen Belastungen widersteht. Des Weiteren soll die Ausgestaltung des Klemmenkastens auch einfach an bisherigen Klemmenkasten dynamoelektrischer Maschinen nachrüstbar sein.

Die Lösung der gestellten Aufgabe gelingt durch einen Klemmenkasten einer dynamoelektrischen Maschine mit einem Anschlusselement, das einen Isolator aufweist, dessen Fußbereich auf einer Basisplatte angeordnet ist, dessen Kopfbereich dazu ausgebildet ist, zumindest eine erste zugehende elektrische Leitung und eine zweite abgehende elektrische Leitung zu kontaktieren, die über eine vorgegebene Öffnungen des Klemmenkastens in den Klemmenkasten führbar sind, wobei der Kopfbereich des Anschlusselements mit zumindest einer Verstärkungsplatte versehen ist, die sich an dem Gehäuse des Klemmenkastens abstützt.

Die Lösung der gestellten Aufgabe gelingt ebenso durch einen Klemmenkasten einer dynamoelektrischen Maschine mit mehreren Anschlusselementen, die jeweils einen Isolator aufweisen, dessen Fußbereich auf einer Basisplatte angeordnet ist, dessen Kopfbereich dazu ausgebildet ist, erste zugehende elektrische Leitungen und eine zweite abgehende elektrische Leitungen zu kontaktieren, die über eine vorgegebene Öffnungen des Klemmenkastens in den Klemmenkasten führbar sind, wobei der Kopfbereich der Anschlusselemente mit zumindest einer Verstärkungsplatte versehen ist, die sich an dem Gehäuse des Klemmenkastens und/oder anderen Kopfbereichen benachbarter Anschlusselemente dieses Klemmenkastens abstützt.

Die Lösung der gestellten Aufgabe gelingt ebenfalls durch eine dynamoelektrische Maschine mit zumindest einem erfindungsgemäßen Klemmenkasten.

Durch eine Abstützung des Kopfbereichs des Anschlusselements bzw. der Kopfbereiche der Anschlusselemente durch die Verstärkungsplatte, insbesondere an Gehäuseteilen des Klemmenkastens und/oder gegenseitiger Abstützung an anderen Kopfbereichen der Isolatoren können vergleichsweise größere Kräfte abgestützt werden. Diese äußere Krafteinwirkung, z.B. bei Kurzschlussbeanspruchungen wird insbesondere in der Gegend des Isolators abgefangen, dort vor allem im Kopfbereich des Anschlusselements also am Isolator. Also dort wo erste elektrische Leitungen von außen mit zweiten elektrischen Leitungen aus dem Innern der dynamoelektrischen Maschine kontaktiert werden. Dadurch wird vermieden, dass der Isolator einer Biegebelastung ausgesetzt ist, die über den Fußbereich abgefangen werden muss.

Pro Klemmenkasten sind im Normalfall Anschlusselemente für drei Phasen vorgesehen. Die Erfindung beschränkt sich aber nicht nur auf dreiphasige Klemmenkasten bzw. Anschlusskasten. Es kann nahezu eine beliebige Anzahl von Phasen und damit Anschlusselementen in einem Klemmenkasten vorhanden sein.
Pro Phase ist also mindestens ein Anschlusselement vorhanden.

So kann pro Klemmenkasten nur eine Phase vorhanden sein, also nur ein Anschlusselement.

Ebenso ist es möglich dass sich eine Phase auf mehrere Anschlusselemente verteilt, dass also je nach Anzahl der Phasen beispielsweise sechs, neun zwölf oder mehr Anschlusselemente vorhanden sind.

Erfindungsgemäß eignen sich derartige Verstärkungsplatten auch als Nachrüstsätze für Klemmenkästen anderer dynamoelektrischer Maschinen, da diese Verstärkungsplatten vergleichsweise einfach den vorhandenen räumlichen Verhältnissen innerhalb eines Klemmenkastens anpassbar und dort auf die Kopfbereiche der Anschlusselemente montierbar sind.

Grundsätzlich weisen diese Verstärkungsplatten kriechstreckenvergrößernde Elemente wie Rippen, Durchbrüche oder Kanäle auf, die der Potentialtrennung zwischen den Phasen als auch zwischen einer Phase und dem Gehäuse des Klemmenkastens dienen.

Des Weiteren können diese Elemente, aber auch weitere zusätzliche Mittel auf den Verstärkungsplatten vorgesehen werden, die im Kurzschlussfall innerhalb des Klemmenkastens zur Löschung beispielsweise durch Aufweiten eines Lichtbogens beitragen. Diese Mittel können als Durchbrüche oder Wandungen auf der Verstärkungsplatte ausgebildet sein.

Die Erfindung sowie weitere vorteilhafte Ausgestaltungen der Erfindung werden anhand folgender Ausführungsbeispiele näher gezeigt. Darin zeigen:
- FIG 1: eine prinzipielle dynamoelektrische Maschine,
- FIG 2: einen Schnitt durch einen Klemmenkasten,
- FIG 3: einen geöffneten Klemmenkasten,
- FIG 4 bis FIG 6: Ausführungsbeispiele von Verstärkungsplatten.

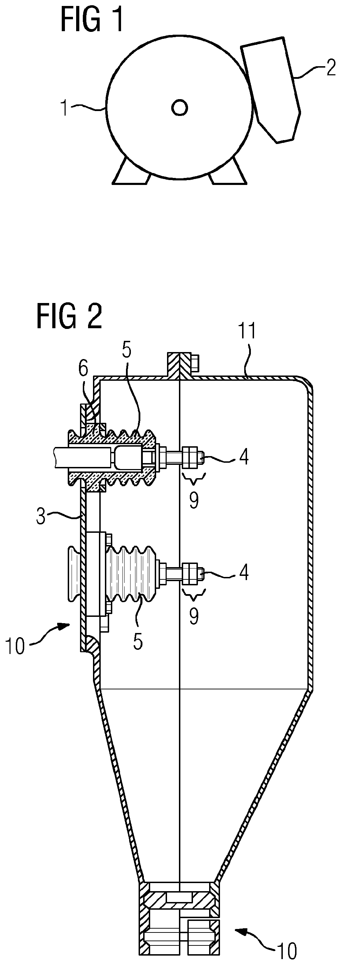

FIG 1 zeigt in einer prinzipiellen Darstellung eine Seitenansicht einer dynamoelektrischen Maschine 1 mit einem Klemmenkasten 2. Die dynamoelektrische Maschine 1 kann dabei eine Asynchronmaschine, eine Synchronmaschine oder andere dynamoelektrische Maschine sein, ebenso ist die Anzahl und Form der Klemmenkasten 2 durch die prinzipielle Darstellung nicht weiter vorgegeben.

FIG 2 zeigt in einem Schnitt einen beispielhaften Klemmenkasten 2 mit einer Basisplatte 3, an der Anschlusselemente angeordnet sind. Die Anschlusselemente weisen einen Anschlussbolzen 4 auf und werden im Bereich der Basisplatte 3 und dem Gehäuse 11 von einem Isolator 5 umgeben. Am Fußbereich 6 des Isolators 5 sind die Isolatoren 5 an der Basisplatte 3 und/oder am Gehäuse 11 befestigt. Auf diese Verbindung am Fußbereich 6 wirken beispielsweise in einem Kurzschlussfall vor allem innerhalb des Klemmkastens 2 die größten Kräfte, die dann insbesondere der Fußbereich 6 des Isolators 5 aufnehmen muss.

Für den elektrischen Anschluss der dynamoelektrischen Maschine 1 werden Kabel oder Leitungen, also erste elektrische Leitungen über vorgegebene Öffnungen 10 des Klemmenkastens 2 in den bzw. aus dem Klemmenkasten 2 geführt. Über Kabelschuhe oder andere Anschlussmittel 8 werden die Kabel oder Leitungen mit den Anschlussbolzen 4 im Kopfbereich 9 elektrisch leitend verbunden. Von dort führen elektrisch leitfähige Verbindungen, die zweiten elektrischen Leitungen, über weitere Öffnungen 10, des Gehäuses 11 oder der Basisplatte 3 in die dynamoelektrische Maschine 1, z.B. zu einem nicht näher dargestellten Wicklungssystem eines Stators und/oder eines Rotors oder Hilfsantrieben, wie Fremdlüfter.

Über elektrische Verbindung zu dem nicht näher dargestellten Wicklungssystem des Stators und/oder des Rotors der dynamoelektrischen Maschine 1 wird elektrische Energie vom Kopfbereich 9 der Anschlussbolzen 4 der dynamoelektrischen Maschine 1 zugeführt oder entnommen.

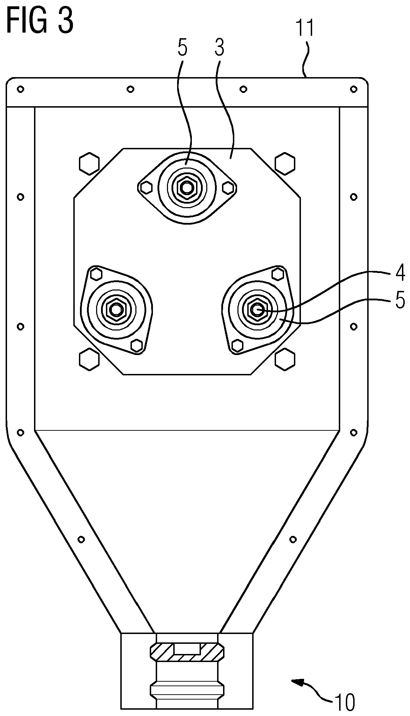

FIG 3 zeigt in einem geöffneten Gehäuse 11 des Klemmenkastens 2 die prinzipiell angeordnete Anschlussbolzen 4 mit ihren Isolatoren 5, die an der Basisplatte 3 positioniert sind.

Pro Klemmenkasten 2 sind im Normalfall Anschlusselemente für drei Phasen vorgesehen. Es kann aber auch pro Klemmenkasten 2 nur eine Phase vorhanden sein, also nur ein Anschlusselement. Ebenso ist es möglich, dass sich eine Phase auf mehrere Anschlusselemente verteilt, dass also je nach Anzahl der Phasen beispielsweise im Klemmenkasten 2 sechs, neun oder zwölf Anschlusselemente vorhanden sind. Dementsprechend sind die Verstärkungsplatten 7 zu gestalten.

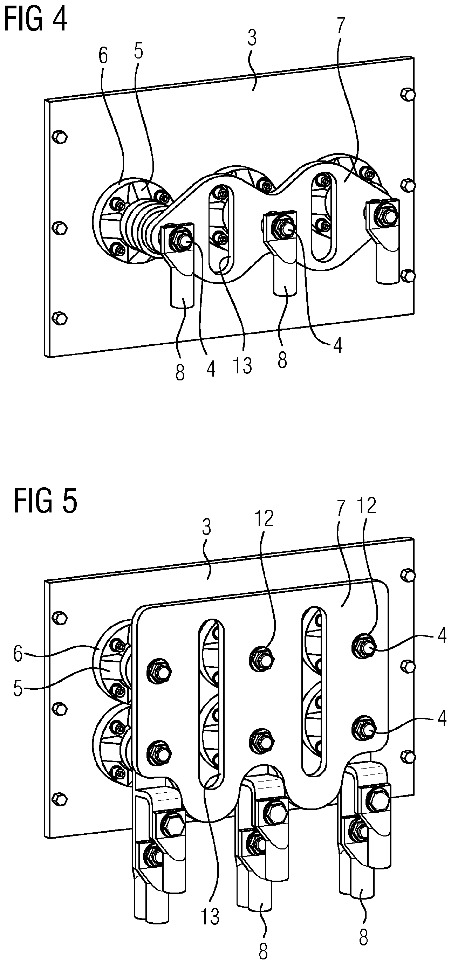

FIG 4 zeigt eine weitere Anordnung von Anschlussbolzen 4 an einer Basisplatte 3. Der Kopfbereich 9 der Anschlussbolzen 4 zeigt Anschlussmitteln 8 und eine Verstärkungsplatte 7, die unterhalb der Anschlussmittel 8 auf dem Anschlussbolzen 4 fixiert ist. Dies erleichtert den elektrischen Anschluss.

Zur besseren Lüftung innerhalb des Klemmenkastens 2 und/oder zur gegebenenfalls Lichtbogensteuerung bzw. Lichtbogenaufweitung im Kurzschlussfall zwischen zwei Anschlussbolzen 4 oder einem Anschlussbolzen 4 und dem geerdeten Gehäuse 11 des Klemmenkastens 2 weist die Verstärkungsplatte 7 Durchbrüche 13 auf. Diese Durchbrüche 13 dienen ergänzend auch zur Sicherstellung der für die Potentialtrennung erforderlichen Kriechstrecken.

FIG 5 zeigt in einer anderen Ausführung die Anordnung der Anschlussbolzen 4, die ebenfalls durch eine dementsprechend geeignete Verstärkungsplatte 7 fixiert sind. Dabei sind pro Phase zwei Anschlusselemente vorgesehen. In dieser Ausführung sind die Anschlussmittel 8 aus montagetechnischen Gründen und zur Einhaltung von elektrischen Abständen zum Gehäuse 11 unterhalb der Verstärkungsplatte 7.

Die Verstärkungsplatten 7 weisen Ausnehmungen 12 auf, um die Anschlussbolzen 4 aufnehmen zu können. Der elektrische Anschluss der Kabel oder Leitungen erfolgt also entweder direkt auf der durch die Ausnehmungen ragenden Anschlussbolzen 4 der Verstärkungsplatte 7 oder direkt darunter, abhängig von den Anschlussbedingungen, wie Einhaltung von Schlagweiten, Montagefreundlichkeit, Zugänglichkeit etc.

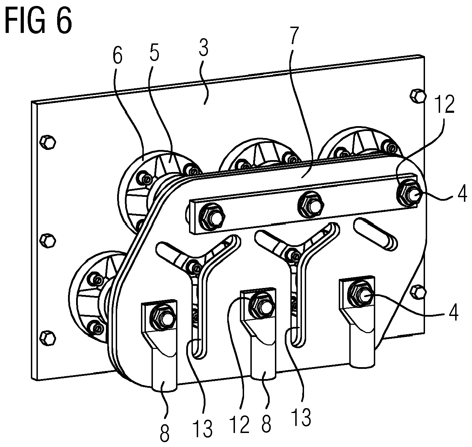

FIG 6 zeigt eine weitere Ausführungsform mit anders geformten Durchbrüchen 13 der Verstärkungsplatte 7.

Die Verstärkungsplatte 7 ist aus einem Isolatorwerkstoff, der im Betriebsfall der dynamoelektrischen Maschine 1 verhindert, dass sich Kurschlüsse zwischen den Phasen ergeben und/oder zwischen Phase und Erde ausbildet. Er dient durch sein Material und/oder seine Formgestaltung und/oder der Formgestaltung seiner Durchbrüche 13 u.a. der Potentialtrennung zwischen den Phasen und/oder den Phasen und dem geerdeten Gehäuse 11 des Klemmenkastens 2.

Die Verstärkungsplatte 7 kann auch schichtartig aufgebaut sein, wobei je einzelne Schicht separat auf die Anschlussbolzen 4 setzbar ist, wie dies FIG 6 zu entnehmen ist. Damit lassen sich Verstärkungsplatten für unterschiedliche Spannungsebenen generieren. Dabei können sowohl zusätzliche Verstärkung generiert werden, als auch unterschiedliche Materialen pro Schicht eingesetzt werden, die unterschiedliche mechanische Festigkeiten, als auch unterschiedliche Temperaturbeständigkeiten aufweisen. Idealerweise sind dabei die Schichten deckungsgleich bezüglich ihrer Form und den Durchbrüchen 13.

Derartige Klemmenkasten 2 mit Verstärkungsplatten sind in dynamoelektrischen Maschinen 1 bei Industrieanwendungen, wie Förderanlagen, Pumpenantrieben, Kompressorantrieben als auch bei Antrieben in der Fahrzeugtechnik einsetzbar.

## Patentansprüche

1. Klemmenkasten (2) einer dynamoelektrischen Maschine (1) mit einem Anschlusselement, das einen Isolator (5) aufweist, dessen Fußbereich (6) auf einer Basisplatte (3) angeordnet ist, dessen Kopfbereich (9) dazu ausgebildet ist, zumindest eine erste zugehende elektrische Leitung und eine zweite abgehende elektrische Leitung zu kontaktieren, die über vorgegebene Öffnungen (10) des Klemmenkastens (2) in den Klemmenkasten (2) führbar sind, wobei der Kopfbereich (9) des Anschlusselements mit zumindest einer Verstärkungsplatte (7) versehen ist, die sich an dem Gehäuse (11) des Klemmenkastens (3) abstützt.

2. Klemmenkasten (2) einer dynamoelektrischen Maschine (1) mit mehreren Anschlusselementen, die jeweils einen Isolator (5) aufweisen, dessen Fußbereich (6) auf einer Basisplatte (7) angeordnet ist, dessen Kopfbereich (9) dazu ausgebildet ist, erste zugehende elektrische Leitungen und eine zweite abgehende elektrische Leitungen zu kontaktieren, die über vorgegebene Öffnungen (10) des Klemmenkastens (3) in den Klemmenkasten (2) führbar sind, wobei der Kopfbereich (9) der Anschlusselemente mit zumindest einer Verstärkungsplatte (7) versehen ist, die sich an dem Gehäuse (11) des Klemmenkastens (2) und/oder anderen Kopfbereichen (9) benachbarter Anschlusselemente dieses Klemmenkastens (2) abstützt.

3. Klemmenkasten (2) nach Anspruch 1 oder 2, **dadurch gekennzeichnet, dass** die Verstärkungsplatte (7) einstückig aus Isolationsmaterial aufgebaut ist.

4. Klemmenkasten (2) nach Anspruch nach einem der vorhergehenden Ansprüche, **dadurch gekennzeichnet, dass** die Verstärkungsplatte (7) Mittel, wie Durchbrüche (13) und/oder Wandungen aufweist, die vorzugsweise derart gestaltet sind, dass in einem Kurzschlussfall in dem Klemmenkasten (2) ein Lichtbogen aufgeweitet und damit löschbar ist.

5. Klemmenkasten (2) nach Anspruch nach einem der vorhergehenden Ansprüche, **dadurch gekennzeichnet, dass** die Verstärkungsplatte (7) kriechstreckenvergrößernde Elemente wie Rippen, Durchbrüche (13) oder Kanäle aufweist, die der Potentialtrennung zwischen den Phasen als auch zwischen einer Phase und dem Gehäuse (11) des Klemmenkastens (2) dienen.

6. Dynamoelektrische Maschine (1) mit zumindest einem Klemmenkasten (2) nach einem der vorhergehenden Ansprüche, wobei die Basisplatte (3) des Klemmenkasten (2) am Gehäuse der dynamoelektrischen Maschine (1) angeordnet ist.
